# EUROPEAN PATENT SPECIFICATION

(11) **EP 2 521 802 B1**
(45) Date of publication and mention of the grant of the patent: **12.02.2020**
(21) Application number: 10737409.2
(22) Date of filing: 13.07.2010
(51) Int. Cl.: C23C 4/06, C23C 28/00, C23C 30/00

(54) **COATING SYSTEM FOR CLEARANCE CONTROL IN ROTATING MACHINERY**
BESCHICHTUNGSSYSTEM ZUR ABSTANDSKONTROLLE BEI EINER ROTATIONSMASCHINE
SYSTEME DE REVETEMENT POUR REDUCTION DES JEUX DANS DES MACHINES TOURNANTES

(30) Priority: 14.07.2009 US 225241 P
(43) Date of publication of application: 14.11.2012
(73) Proprietor: Praxair S.T. Technology, Inc., North Haven, CT 06473 (US)
(72) Inventor: TAYLOR, Thomas, Alan, Indianapolis IN 46220 (US)
(74) Representative: BRP Renaud & Partner mbB Rechtsanwälte Patentanwälte Steuerberater
(86) International application number: PCT/US2010/041759
(87) International publication number: WO 2011/008719

(56) References cited:
- EP-A2- 0 919 699
- WO-A1-2007/053493
- WO-A2-2004/094685
- GB-A- 2 010 982
- US-A- 5 104 293
- US-A1- 2008 160 172

## Description

### Field of the Invention

The invention relates to gas turbine engine seal systems having a rotating member with an abrasive tip surface disposed in rub relationship to a stationary seal member with an abradable surface. The abrasive tip surface is coated with a metallic alloy matrix having ceramic abrasive particles embedded in and projecting from the matrix. The abradable seal surface is coated with a ceramic coating. The rub relationship affords a tight operating clearance between the rotating member and the stationary seal member, thereby improving engine efficiency, reducing fuel consumption and minimizing overhaul downtime.

### Background of the Invention

Modern gas turbine engines are comprised of three major sections or components which function together to produce thrust for aircraft propulsion. In the compressor section, incoming ambient air is compressed and thus heated by a number of stages of rotating blades and stationary vanes. In the initial stages of the compressor the blades are generally made of titanium alloys, and in the later stages where temperatures are higher, the blades are generally made of iron or nickel base alloys. The compressed air may be heated to 1200°F (648,9°C) to 1400°F (760°C) at the last stage of compression, where it is passed on to the combustor section where fuel is injected and burned. The hot gases exiting the combustor section may be about 2400°F, (1315,6°C), and are directed upon the first stage vane and blade of the turbine section. In the turbine section, comprised of a number of stages of rotating blades and stationary vanes, the actual work is extracted from the hot, compressed gases that turn the turbine which is connected to drive the earlier compressor section. A significant portion of the engine thrust comes from the large fan section at the front of the engine, which takes in ambient air and thrusts it backwards at a high velocity. The fan is also driven by the turbine section.

In the compressor, the early stages of the low pressure compressor section are comprised of titanium alloy blades that rotate at high speed. The blades are designed such that their tips are very close to a stationary seal ring. The purpose of the close gap is to minimize gas leakage and to allow the pressure of the air to increase from one stage to the next. Narrow tip to seal gaps lead to higher engine efficiency and greater power output. If the gap is too narrow, there is the possibility of a rub between the tip and the seal. This can occur, for example, when the engine is started or if the pilot advances the throttle for more power. In these cases the blade can heat up faster than the surrounding case and through thermal expansion become longer and thus rub the seal ring. There are likely other mechanisms that also cause rubs. When the titanium alloy blade rubs the seal, the friction can be very high and the blade tip can heat up quickly to temperatures where the hot titanium can actually burn or oxidize with a further great liberation of heat. These situations are essentially titanium fires, and if left unchecked could damage the engine. Accordingly, a coating on the tip of these titanium blades is applied to separate the bare titanium from the seal material if a rub should occur. In latter stages of the compressor where the temperatures are higher, iron or nickel base alloy blades are used, and these require tip coatings as well.

In the turbine, the early stages of the high pressure turbine section are generally comprised of nickel base superalloy blades that rotate at high speed. These blades are also designed such that their tips are very close to a stationary seal ring. The purpose of the close gap is to minimize gas leakage and to allow the pressure of the air to do work against the turbine blades, causing them to rotate. Narrow tip to seal gaps lead to higher engine efficiency and greater power output. If the gap is too narrow, there is the possibility of a rub between the tip and the seal. As stated above, this can occur, for example, when the engine is started or if the pilot advances the throttle for more power. In these cases the blade can heat up faster than the surrounding case and through thermal expansion become longer and thus rub the seal ring. There are likely other mechanisms that also cause rubs. Typically, when a bare superalloy blade tip rubs against a bare cast superalloy seal, then the blade tip is worn back.

In the continuing search for higher efficiency of operation, manufacturers are looking for better gas turbine engine seal systems. The demands on wear resistant, abrasive blade tip coatings aad abradable seal coatings increase even more. Likewise, the demands for a rub relationship that affords a tight operating clearance between the tips and seal surfaces increases even more.

There continues to be a need in the art to provide improved gas turbine engine seal systems, particularly improved wear resistant, abrasive coatings for tips of turbine and compressor blades and improved abradable coatings for stationary seal surfaces, having a rub relationship that affords a tight operating clearance between the tips and seal surfaces. There is a continuing need in the art to improve engine efficiency, reduce fuel consumption and minimize overhaul downtime.

### Summary of the Invention

The present invention is a gas turbine engine seal system as it is defined in independent claim 1.

The invention relates in part to a gas turbine engine seal system comprising a rotating member having an abrasive tip surface disposed in rub relationship to a stationary abradable seal surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix; wherein said abradable seal surface comprises an abradable ceramic coating deposited onto at least a portion of the seal surface, wherein said ceramic coating is made from a ceramic powder comprising ceramic powder macroparticles, said ceramic powder macroparticles comprising a zirconia-based component and an (alumina + silica)-based component, wherein said ceramic powder macroparticles contain from about 10 to about 95 percent by weight of the zirconia-based component and about 5 to about 90 percent by weight of the (alumina + silica)-based component, and wherein the average particle size (diameter) of the ceramic powder macroparticles is from about 10 to about 150 microns; and wherein said gas turbine engine seal system has a tip-to-seal wear ratio of at least 1:10, preferably at least 1:20. The ceramic coating can further include a third component comprising pure alumina. The infeed per strike of the abrasive tip surface to the stationary abradable seal surface generates wear debris particles having an average particle size (diameter) of from about 1 micron or less to about 150 microns.

### Detailed Description of the Invention

In an embodiment, this invention relates to a gas turbine engine seal system, wherein said ceramic abrasive particles are selected from alumina polycrystal, alumina single crystal (sapphire), chromia-doped alumina single crystal (ruby), yttria-alumina garnet (YAG), titania-doped alumina polycrystal or single crystal (emerald), SiAlON, SiC, Si3N4 or diamond.

The gas turbine engine seal systems of this invention require maintenance of tight clearances between a rotating member having an abrasive tip surface and a stationary abradable seal surface. The rotating member may be an abrasive turbine or compressor blade tip or an abrasive turbine or compressor knife edge. The abrasive blade tip or knife edge may be paired with an abradable seal surface to form an outer or inner airseal.

As described above, a typical gas turbine engine includes a compressor section and a turbine section. The compressor section includes a plurality of compressor blades that are mounted on a compressor rotor. A plurality of compressor stators are disposed between the compressor blades. The turbine section includes a plurality of turbine blades that are mounted on a turbine rotor. A plurality of turbine vanes are disposed between the turbine blades.

The rotating member can be, for example, a turbine blade, a turbine rotor knife edge disposed on a turbine rotor and an abradable seal surface is disposed on a turbine vane to form an inner air seal, a compressor blade, or a compressor rotor knife edge disposed on a compressor rotor and an abradable seal surface is disposed on a compressor stator to form an inner air seal.

With regard to the rotating member having the abrasive tip surface, the abrasive tip surface has an abrasive coating deposited onto at least a portion of the tip surface. The abrasive coating is a metallic alloy matrix having ceramic abrasive particles at least partially embedded in the matrix and at least some of the ceramic abrasive particles project from the matrix. The ceramic abrasive particles are hard, tough, angular particles held in the matrix of nominal size from about 4 mils (0.102 mm) to about 15 mils (0.381 mm).

As indicated above, this invention relates in part to a rotating member of a gas turbine engine seal system, said rotating member having an abrasive tip surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix, wherein said ceramic abrasive particles are selected from alumina polycrystal, alumina single crystal (sapphire), chromia-doped alumina single crystal (ruby), yttria-alumina garnet (YAG), titania-doped alumina polycrystal or single crystal (emerald), SiAlON, SiC, Si3N4 or diamond.

As also indicated above, this invention relates in part to an abrasive coating comprising a metallic alloy matrix having ceramic abrasive particles at least partially embedded in said matrix and at least some of the ceramic abrasive particles projecting from said matrix, wherein said ceramic abrasive particles are selected from alumina polycrystal, alumina single crystal (sapphire), chromia-doped alumina single crystal (ruby), yttria-alumina garnet (YAG), titania-doped alumina polycrystal or single crystal (emerald), SiAlON, SiC, Si3N4 or diamond.

The abrasive coating is preferably a metallic alloy matrix that adheres well to the rotating member to which it is applied. The metallic alloy matrix can comprise MCrAlY where M is Ni, Co, Fe or combinations thereof. Preferably, the metallic alloy matrix is selected from NiCrAlY, NiCoCrAlY and CoNiCrAlY.

The ceramic abrasive particles are preferably selected from alumina, chromia and alloys thereof. In particular, the ceramic abrasive particles are selected from cubic boron nitride (cBN), alumina polycrystal, alumina single crystal (sapphire), chromia-doped alumina single crystal (ruby), yttria-alumina-garnet (YAG), titania-doped alumina polycrystal, titania-doped alumina single crystal (emerald), SiAlON, SiC, Si3N4 and diamond. The ceramic abrasive particles comprise angular ceramic abrasive particles of nominal size from about 4 to about 15 mils.

Certain of the ceramic abrasive particles may be more suitable for a particular section of the gas turbine engine. For example, some ceramic abrasive particles may be more suitable for the compressor section while others are more suitable for the turbine section.

Preferably, the ceramic abrasive particles have a hardness (in Kg/mm2) of from about 1000 to about 7000, preferably from about 1500 to about 7000, and fracture toughness (in Mpa^{∗}m0.5) of from about 1.5 to about 8, preferably from about 2 to about 8. The product of the hardness (in Kg/mm2) and the fracture toughness (in Mpa^{∗}m0.5) is preferably greater than that for pure zirconia single crystals. The ceramic abrasive particles are embedded in the matrix to a depth of about nominally half the size of the ceramic abrasive particles, with an upper portion of the ceramic abrasive particles projecting above the matrix.

Preferably, at least some of the abrasive articles are partially embedded in the metallic alloy matrix and at least some of the ceramic abrasive particles project above the outer surface of the abrasive coating formed by the metallic alloy matrix.

The abrasive coating of this invention may be formed by depositing, e.g., electrodepositing, the metallic alloy matrix, e.g., MCrAlY alloy, on the substrate to form an initial layer. Thereafter, deposition of the MCrAlY alloy is continued in the presence of the ceramic abrasive particles, such that a dispersion of the ceramic abrasive particles is incorporated into the MCrAlY alloy layer. An outer layer of MCrAlY alloy is then deposited onto the initial MCrAlY alloy layer having ceramic abrasive particles incorporated therein. Deposition of the outer MCrAlY alloy layer is limited to ensure that at least some of the ceramic abrasive particles project above the surface of the outer MCrAlY alloy layer. The abrasive coating thickness can range from about 0.0025 to about 0.10 inches or greater, preferably not greater than about 0.025 inches.

The abrasive coating may be deposited directly onto the rotating member or may be deposited over a bondcoat applied to the rotating member. The bondcoat can be deposited between the tip surface and the abrasive coating and is preferably particle free. The bondcoat can comprise MCrAlY where M is Ni, Co, Fe or combinations thereof. The bondcoat can have a surface roughness of at least about 150 microinches (3.81µm). The bondcoat typically ranges in thickness from about 3 to about 10 mils (about 0.08 to about 0.25 mm).

The bond coating can comprise (i) an alloy containing chromium, aluminum, yttrium with a metal selected from the group consisting of nickel, cobalt and iron or (ii) an alloy containing aluminum and nickel. In particular, the bond coating can comprise a MCrAlY+X coating applied by a plasma spray method, a detonation spray method or an electroplating method, where M is Ni, Co or Fe or any combination of the three elements, and X includes the addition of Pt, Ta, Hf, Re or other rare earth metals, or fine alumina dispersant particles, singularly or in combination.

With a bondcoat, the rotating member may be heated in vacuum at a temperature sufficient to create a bond between the bondcoat and the tip surface. Without a bondcoat, the rotating member may be heated in vacuum at a temperature sufficient to create a bond between the abrasive coating and the tip surface. Preferably, the abrasive coating is deposited by electroplating.

Partially embedding the ceramic abrasive particles in the metallic alloy matrix layer gives an abrasive coating that is suitable as an abrasive tip for a rotary member, e.g., blade tip, for gas turbine engines. The abrasive tip coating is capable of surviving numerous rub encounters with a stationary abradable seal surface in a hostile environment typical of gas turbine engines. The metallic alloy matrix layer protects the underlying substrate from the hostile engine environment, while the ceramic abrasive particles protect the substrate and metallic alloy matrix layer from contact with the stationary abradable seal surface.

With regard to the stationary abradable seal surface, the surface has an abradable ceramic coating deposited onto at least a portion of the seal surface. The ceramic coating can be any suitable metal oxide, for example, yttria-stabilized zirconia, ytterbia-stabilized zirconia, gadolinia-stabilized zirconia, and the like. Preferably, the ceramic coating contains alumina. The zirconia can be stabilized in the tetragonal or cubic crystalline structure, or a mixture of the tetragonal or cubic crystalline structures. Stabilization can occur by additions selected from yttria, magnesia, calcia, hafnia, ceria, gadolinia, ytterbia, Lanthanides, or mixtures thereof.

Many attributes preferably should be met simultaneously by a ceramic coating on a seal segment or ring including that it may have to be both abradable and a thermal barrier. The abradability of a material is a function of a number of factors including the material's mechanical strength, density, friability, temperature of operation, nature of interacting at its rub surface, and the like.

The engine seal system comprising an abradable coating applied to the stationary member opposite the rotating blade tips, i.e., the stationary seal, should be designed to be gouged out in a circular track in a rub situation, thereby minimizing the wear on the blade tip. A wear track on the abradable seal is desired as this has much less effect on loss of compression between stages than reduced blade length due to tip wear. Massive or sudden tip wear can lead to compressor stall and loss of engine power, thus creating a serious situation.

Some compressor abradable coatings in the art have the tendency to sinter and harden during engine service. This reduces their ability to abrade and thus forces much more of the wear in a rub situation to the blade tip or tip coating. In accordance with this invention, abradable coatings for compressor and turbine sections are provided that are all ceramic and much less likely to sinter and harden at operating temperatures. This invention also provides heat treatment options for the ceramic abradable coatings that further enhance their long term stability.

Illustrative abradable ceramic coatings useful in this invention include, for example, low density ceramic coatings such as yttria-stabilized zirconia coatings; yttria-stabilized zirconia coatings having a macrocracked microstructure (i.e., a plurality of microcracks distributed throughout the coating); coatings having a zirconia-based component and an (alumina + silica)-based component; and the like. Preferably, the low density ceramic coatings contain alumina. Multilayer ceramic coatings described herein may also be useful in this invention.

In an embodiment, the abradable ceramic coatings useful in this invention comprise multiphase coatings of insoluble components that resist sintering, e.g., coatings having a zirconia-based component and an (alumina + silica)-based component, or other insoluble binary or ternary phases. The infeed per strike of the abrasive tip surface to the stationary abradable seal surface generates wear debris particles having an average particle size (diameter) of from about 1 micron or less, e.g., sub-microns, to about 150 microns. The porosity of the abradable ceramic coating can be controlled in size and distribution to enhance the breakdown of the coating to locations at micron sized particle boundaries or along shear planes of micron size thickness. The thermally sprayed powders utilized herein can be produced to retain porosity within macro-particles, e.g., a zirconia-based powder and an (alumina + silica)-based powder. The thermal spray coating parameters and optional heat treatment of the coating can enhance the porosity distribution for abradability. Also, post-coating infiltrating additives can be used to form local particle bonds for enhanced erosion resistance with minimal reduction in abradability.

The stabilized zirconia coatings are typically low density coatings, e.g., having a density of about 45 to 90 percent of theoretical. Advantageously, the yttria-stabilized zirconia coating's density is about 45 to 90 percent theoretical, more advantageously 50 to 86 percent theoretical, and most advantageously density is about 50 to 70 percent theoretical. Other illustrative compositions of the low density coatings include, for example, stabilized zirconia that is fully or partially stabilized with yttria, ytterbia, ceria, other rare earths, magnesia, or other oxides. The low density ceramic coating may be other oxides such as alumina, chromia, or magnesia.

Preferably, the stabilized zirconia can be fully or partially stabilized with from about 6 to about 25, preferably from about 6 to about 10, more preferably from about 6.5 to about 8, weight percent yttrium oxide (yttria) or from about 10 to about 36, preferably from about 10 to about 16, more preferably from about 11 to about 14, weight percent ytterbium oxide (ytterbia).

An illustrative stabilized zirconia is made from a high purity yttria or ytterbia stabilized zirconia powder comprising from about 0 to about 0.15 weight percent impurity oxides, from about 0 to about 2 weight percent hafnium oxide (hafnia), from about 6 to about 25 weight percent yttrium oxide (yttria) or from about 10 to about 36 weight percent ytterbium oxide (ytterbia), and the balance zirconium oxide (zirconia). See, for example, WO 2008/054536, the disclosure of which is incorporated herein by reference.

Stabilized zirconia powder used in making the stabilized zirconia coatings can be blended with a fugitive material, e.g., controlled size particles of a polyester or Lucite. The stabilized zirconia powder and fugitive material can be thermally sprayed to form a precursor coating that is heat treated to volatilize the fugitive material and to produce a coating having at least about 20% porosity. The fugitive material can be separately injected into a thermal spray device at a point of lower plume enthalpy and co-sprayed with the stabilized zirconia powder. The stabilized zirconia powder can additionally be blended with a solid lubricant, e.g., hexagonal boron nitride. The solid lubricant can be separately injected into a thermal spray device at a point of lower plume enthalpy and co-sprayed with the ceramic powder. The stabilized zirconia powder utilized herein is comprised of particles having an average particle size (diameter) of from about 1 to about 150 microns.

The stabilized zirconia coatings are conventional materials that are commercially available. Such coatings can be sprayed or deposited by conventional methods known in the art such as plasma spray, detonation gun, high velocity oxy-fuel (HVOF), or high velocity air-fuel (HVAF). Thermal spray is a preferred method for deposition of the abradable ceramic coatings utilized in this invention.

Multilayer ceramic coatings may also be useful in this invention. For example, an inner layer or bondcoat can be applied to the substrate and the abradable ceramic coating can be applied over the inner layer or bondcoat. Illustrative metallic and metallic/ceramic inner layers or bondcoats that can be deposited onto the substrate include, for example, thermally sprayed metallic bondcoat layers of NiCoCrAlY or NiCrAlY and oxide-dispersed layers of these metallic components with alumina or yttria particulates, or diffusion produced layers of aluminide or platinum-aluminide compounds. The bondcoat can have a surface roughness of at least about 150 microinches (3.81µm). The bondcoat typically ranges in thickness from about 3 to about 10 mils (about 0.08 to about 0.25 mm). Single or multiple layers of bondcoats or inner layer coats can be first applied to a metal substrate producing a controlled upper surface roughness of at least about 150 microinches (3.81µm) prior to the ceramic layer or layers. In addition, the bondcoat or inner layers can be heat treated before or after the over-coated ceramic layers are applied. The bondcoat or inner layers can be heat treated, then the over-coated ceramic layers can be applied, and then all the layers can be heat treated together. The bondcoat or inner layers and the over-coated ceramic layers can be heat treated together in one heat treatment. The bondcoat or inner layers can be heat treated and the over-coated ceramic layers not heat treated.

Illustrative metallic and non-metallic substrates include, for example, metallic superalloys of various nickel-base, cobalt-base or iron-base compositions and ceramic materials composed of silicon carbide and silicon nitride based non-metallics.

A suitable thickness for the abradable ceramic coatings, e.g., stabilized zirconia coatings, can be up to about 1000 microns or greater depending on the particular application and the thickness of any other layers. The abradable ceramic coating thickness can range from about 0.02 (0.51mm) to about 0.10 inches (2.54mm) or greater. High application temperatures, e.g., up to 1200°C, necessitate thick protective coating systems, generally on the order of 250 microns or more.

As indicated above, this invention relates in part to a gas turbine engine seal system comprising a rotating member having an abrasive tip surface disposed in rub relationship to a stationary abradable seal surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix; wherein said abradable seal surface comprises an abradable ceramic coating deposited onto at least a portion of the seal surface, wherein said abradable ceramic coating comprises a yttria or ytterbia stabilized zirconia coating having a plurality of vertical macrocracks distributed throughout said abradable ceramic coating; and wherein said gas turbine engine seal system has a tip-to-seal wear ratio of at least about 1:10. The infeed per strike of the abrasive tip surface to the stationary abradable seal surface generates wear debris particles having an average particle size (diameter) of from about 1 micron or less to about 150 microns.

In particular, this invention relates in part to a gas turbine engine seal system comprising a rotating member having an abrasive tip surface disposed in rub relationship to a stationary abradable seal surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix; wherein said abradable seal surface comprises an abradable ceramic coating deposited onto at least a portion of the seal surface, wherein said abradable ceramic coating comprises a yttria or ytterbia stabilized zirconia coating in which a cross-sectional area of the coating normal to the seal surface exposes a plurality of vertical macrocracks extending at least half the coating thickness in length up to the full thickness of the coating and having from about 5 to about 200 vertical macrocracks per linear inch measured in a line parallel to the surface of the seal and in a plane perpendicular to the surface of the seal; and wherein said gas turbine engine seal system has a tip-to-seal wear ratio of at least about 1:10. The infeed per strike of the abrasive tip surface to the stationary abradable seal surface generates wear debris particles having an average particle size (diameter) of from about 1 micron or less to about 150 microns.

The zirconia coatings having a macrocracked microstructure are usually zirconia-based ceramics that are stabilized either fully or partially with yttria, ceria, other rare earth oxides, magnesia, or another oxide to stabilize at least one of the tetragonal or cubic crystallographic phases. The ceramic coating may also be other ceramics such as alumina, chromia, or magnesia based oxides.

Macrocracks are those cracks visible in a polished cross section of the coating at 100X magnification. Advantageously, the ceramic coating's macrocracks are vertical with respect to the substrate. Vertical macrocracks are those that are predominantly perpendicular or normal to the plane of the interface of the coating with the substrate with a length that is at least the lesser of 4 mils (0.1 mm) or one half the coating's thickness. If they are at least half the coating's thickness, they may also be called segmentation or vertical segmentation cracks. Horizontal macrocracks are those that are predominantly parallel to the plane of the surface of the substrate and connect one segmentation crack with an adjacent segmentation crack. The ceramic coating can contain a combination of vertical and horizontal macrocracks for increasing the life of the coating. The abradable ceramic coating can typically have at least about 20, or at least about 40, vertical macrocracks per linear inch measured in a line parallel to the surface of the seal and in a plane perpendicular to the surface of the seal.

The ceramic coating advantageously can have vertical macrocracks that extend at least the lesser of about 0.1 mm in length or one half the thickness of the ceramic coating. These vertical macrocracks are segmentation cracks that extend at least one half the thickness of the ceramic coating. In addition, these vertical segmentation macrocracks advantageously have a crack density of about 7.5 to 75 vertical macrocracks per linear centimeter. When the ceramic coating includes horizontal macrocracks, the total horizontal macrocracks can extend from about 15 to 100 percent as cumulatively measured across a plane normal to the interface of the substrate with the coating. Most advantageously, the total horizontal macrocracks extend from about 20 to 60 percent as cumulatively measured across a plane normal to the interface of the substrate with the ceramic coating. The coating process can be controlled to produce vertical segmentation cracking essentially through the full coating thickness, having at least about 10 segmentation cells per inch (cell diameter of 0.1 inch or less).

The horizontal macrocracks may contact more than one vertical macrocrack. The width of the vertical macrocracks can be less than about 1 mil. The abradable ceramic coating can have horizontal crack segments, connecting any two vertical segmentation cracks, measured in the polished cross section, having a total sum length of less than 10% of the coating width.

The ceramic coating, such as a zirconia-based coating, can contain horizontal macrocracks in addition to the vertical macrocracks to form a brick-like structure with a multitude of horizontal cracks of lengths ranging from 5 to 100 mils (0.13 to 2.5 mm) and extending collectively from 15 to 100 percent as measured across a plane that extends the width of the coating.

An illustrative stabilized zirconia powder used in making the macrocracked zirconia coatings is a high purity yttria or ytterbia stabilized zirconia powder comprising from about 0 to about 0.15 weight percent impurity oxides, from about 0 to about 2 weight percent hafnium oxide (hafnia), from about 6 to about 25 weight percent yttrium oxide (yttria) or from about 10 to about 36 weight percent ytterbium oxide (ytterbia), and the balance zirconium oxide (zirconia). See, for example, WO 2008/054536, referred to above.

Stabilized zirconia powder used in making the macrocracked zirconia coatings can be blended with a fugitive material, e.g., controlled size particles of a polyester or Lucite. The stabilized zirconia powder and fugitive material can be thermally sprayed to form a precursor coating that is heat treated to volatilize the fugitive material and to produce a macrocracked coating having at least about 20% porosity. The fugitive material can be separately injected into a thermal spray device at a point of lower plume enthalpy and co-sprayed with the stabilized zirconia powder. The stabilized zirconia powder can additionally be blended with a solid lubricant, e.g., hexagonal boron nitride. The solid lubricant can be separately injected into a thermal spray device at a point of lower plume enthalpy and co-sprayed with the ceramic powder. The stabilized zirconia powder utilized herein is comprised of particles having an average particle size (diameter) of from about 1 to about 150 microns.

The macrocracked ceramic coatings are commercially available. Such macrocracked ceramic coatings can be sprayed or deposited by conventional methods known in the art such as plasma spray, detonation gun, high velocity oxy-fuel (HVOF), or high velocity air-fuel (HVAF). Thermal spray is a preferred method for deposition of the abradable ceramic coatings utilized in this invention. See, for example, U.S. Patent Nos. 5,743,013, 5,073,433 and 5,520,516, the disclosures of which are incorporated herein by reference.

Multilayer ceramic coatings that include at least one abradable ceramic layer having a macrocracked microstructure may also be useful in this invention. For example, an inner layer or bondcoat can be applied to the substrate and the abradable ceramic coating can be applied over the inner layer or bondcoat. Illustrative metallic and metallic/ceramic inner layers or bondcoats that can be deposited onto the substrate include, for example, thermally sprayed metallic bondcoat layers of NiCoCrAlY or NiCrAlY and oxide-dispersed layers of these metallic components with alumina or yttria particulates, or diffusion produced layers of aluminide or platinum-aluminide compounds. The bondcoat can have a surface roughness of at least about 150 microinches. Single or multiple layers of bondcoats or inner layer coats can be first applied to a metal substrate producing a controlled upper surface roughness of at least about 150 microinches (3.81µm) prior to the ceramic layer or layers. The bondcoat typically ranges in thickness from about 3 to about 10 mils (about 0.08 to about 0.25 mm). In addition, the bondcoat or inner layers can be heat treated before or after the over-coated ceramic layers are applied. In an embodiment, a stabilized zirconia layer having the macrocracked structure can be applied over the metallic bondcoat. The bondcoat or inner layers can be heat treated, then the over-coated ceramic layers can be applied, and then all the layers can be heat treated together. The bondcoat or inner layers and the over-coated ceramic layers can be heat treated together in one heat treatment. The bondcoat or inner layers can be heat treated and the over-coated ceramic layers not heat treated. One or more ceramic layers, e.g., stabilized zirconia coating, can be applied over the ceramic layer having a macrocracked microstructure. The one or more ceramic layers can have the same or different composition, porosity and/or segmentation crack density as the ceramic layer having a macrocracked microstructure.

Illustrative metallic and non-metallic substrates include, for example, metallic superalloys of various nickel-base, cobalt-base or iron-base compositions and ceramic materials composed of silicon carbide and silicon nitride based non-metallics.

A suitable thickness for the abradable ceramic coatings, e.g., those having a macrocracked microstructure, can be up to about 1000 microns or greater depending on the particular application and the thickness of any other layers. High application temperatures, e.g., up to 1200°C, necessitate thick protective coating systems, generally on the order of 250 microns or more.

As indicated above, this invention relates in part to a gas turbine engine seal system comprising a rotating member having an abrasive tip surface disposed in rub relationship to a stationary abradable seal surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix; wherein said abradable seal surface comprises an abradable ceramic coating deposited onto at least a portion of the seal surface, wherein said ceramic coating is made from a ceramic powder comprising ceramic powder macroparticles, said ceramic powder macroparticles comprising a zirconia-based component and an (alumina + silica)-based component, wherein said ceramic powder macroparticles contain from about 10 to about 95 percent by weight of the zirconia-based component and about 5 to about 90 percent by weight of the (alumina + silica)-based component, and wherein the average particle size (diameter) of the ceramic powder macroparticles is from about 10 to about 150 microns; and wherein said gas turbine engine seal system has a tip-to-seal wear ratio of at least about 1:10. The ceramic coating can further include a third component comprising pure alumina. The infeed per strike of the abrasive tip surface to the stationary abradable seal surface generates wear debris particles having an average particle size (diameter) of from about 1 micron or less to about 150 microns.

The abradable ceramic coatings can be made from ceramic mixtures comprising a zirconia-based component and an (alumina + silica)-based component, wherein said ceramic mixture contains from about 10 to about 95 percent by weight of the zirconia-based component and about 5 to about 90 percent by weight of the (alumina + silica)-based component, and wherein the size of the zirconia-based component is from about 0.1 to about 10 microns and the size of the (alumina + silica)-based component is from about 0.1 to about 10 microns. See, for example, WO 2007/053493, the disclosure of which is incorporated herein by reference.

Illustrative zirconia-based components include, for example, yttria-stabilized zirconia, ytterbia-stabilized zirconia, gadolinia-stabilized zirconia, and the like. The zirconia-based component can be stabilized in the tetragonal or cubic crystalline structure, or can be a mixture of two zirconia-based components, one stabilized as tetragonal and one stabilized as cubic. Stabilization can occur by additions selected from yttria, magnesia, calcia, hafnia, ceria, gadolinia, ytterbia, Lanthanides, or mixtures thereof.

Illustrative (alumina + silica)-based components include, for example, 3Al2O3.2SiO2 (mullite), silica + mullite, corundum + mullite, and the like. Preferred (alumina + silica)-based components are selected from the composition range forming the mullite structure.

An illustrative stabilized zirconia-based component is high purity yttria or ytterbia stabilized zirconia comprising from about 0 to about 0.15 weight percent impurity oxides, from about 0 to about 2 weight percent hafnium oxide (hafnia), from about 6 to about 25 weight percent yttrium oxide (yttria) or from about 10 to about 36 weight percent ytterbium oxide (ytterbia), and the balance zirconium oxide (zirconia). See, for example, WO 2008/054536, referred to above.

The zirconia-based components and the (alumina + silica)-based components are conventional materials that are commercially available. Preferably, the ceramic mixtures contain an alumina component. The ceramic mixtures can be made by conventional methods, for example, mechanical mixing.

The ceramic mixtures may preferably contain from about 20 to about 95 percent by weight of the zirconia-based component and about 5 to about 80 percent by weight of the (alumina + silica)-based component, more preferably from about 40 to about 95 percent by weight of the zirconia-based component and about 5 to about 60 percent by weight of the (alumina + silica)-based component, and most preferably from about 60 to about 95 percent by weight of the zirconia-based component and about 5 to about 40 percent by weight of the (alumina + silica)-based component. The ceramic mixtures can further comprise an alumina component, for example, from about 5 to about 90 percent by weight of an alumina component.

The abradable ceramic coatings made from ceramic mixtures comprising a zirconia-based component and an (alumina + silica)-based component are preferably made from very fine subparticles and exhibit controlled coating porosity. The fine particles provide for abrasion or loss of coating in a rub situation at a fine scale of the order of the subparticle size. This mechanism is provided by the use of a macroparticle powder comprised of a multitude of fine microparticles, bonded together in the powder making process. Thermally spraying the macroparticle powder is done to preserve much of the fine microparticle structure in the coating.

Preferably the size (diameter) of the zirconia-based component is from about 0.1 to about 10 microns and the size (diameter) of the (alumina + silica)-based component is from about 0.1 to about 10 microns, and more preferably the size of the zirconia-based component is from about 0.1 to about 2 microns and the size of the (alumina + silica)-based component is from about 0.1 to about 2 microns. The size of the alumina component is from about 0.1 to about 10 microns, and more preferably from about 0.1 to about 2 microns. The size of the zirconia-based component may be the same or different from the size of the (alumina + silica)-based component and/or alumina component. The infeed per strike of the abrasive tip surface to the stationary abradable seal surface generates wear debris particles having an average particle size (diameter) of preferably the same or similar size as the microparticles that are bonded together to form the macroparticle powder.

The ceramic powder mixtures can comprise a blend of ceramic powder particles in desired ratios. The ceramic powder particles can be mixed to a desired ratio and spray dried and optionally sintered to produce composite ceramic powder macroparticles. The blend of ceramic powder particles can be controllably spray dried and sintered to produce a size and distribution of microporosity within the composite ceramic powder macroparticles. The composite ceramic powder macroparticles can have an average particle size (diameter) of from about 10 to about 100 microns, preferably from about 25 to about 75 microns, and more preferably from about 40 to about 60 microns.

Illustrative zirconia-based components useful in the ceramic powders are described above. Illustrative (alumina + silica)-based components useful in the ceramic powders are also described above. Illustrative alumina components useful in the ceramic powders include, for example, high purity alumina with very low silica content. The zirconia-based components, the (alumina + silica)-based components and the alumina components are conventional materials that are commercially available.

The average macroparticle size of the ceramic powder mixtures useful in this invention is preferably set according to the type of thermal spray device and thermal spraying conditions used during thermal spraying. The ceramic powder macroparticle size (diameter) can range from about 10 to about 150 microns, preferably from about 25 to about 75 microns, and more preferably from about 40 to about 60 microns.

The ceramic powder mixtures can be blended with a fugitive material, e.g., controlled size particles of a polyester or Lucite. The ceramic powder mixture and fugitive material can be thermally sprayed to form a precursor coating that is heat treated to volatilize the fugitive material and to produce a coating having at least about 20% porosity. The fugitive material can be separately injected into a thermal spray device at a point of lower plume enthalpy and co-sprayed with the ceramic powder mixture. The ceramic powder mixture can be blended with a solid lubricant, e.g., hexagonal boron nitride. The solid lubricant can be separately injected into a thermal spray device at a point of lower plume enthalpy and co-sprayed with the ceramic powder.

The abradable ceramic coatings may be produced by a variety of methods known in the art. These methods include thermal spray (plasma, HVOF, detonation gun, etc.), laser cladding; and plasma transferred arc. Thermal spray is a preferred method for deposition of the abradable ceramic coatings utilized in this invention.

The amount of the zirconia-based component and (alumina + silica)-based component can vary throughout the coating thickness. The thermally-sprayed ceramic mixture coatings can comprise two or more sublayers in which the amount of the zirconia-based component and (alumina + silica)-based component continuously change throughout the sublayers. The thermally-sprayed ceramic mixture coatings can comprise two or more sublayers in which the amount of the zirconia-based component and (alumina + silica)-based component discretely change from one sublayer to another.

In an embodiment, the sublayers can have a graded composition, continuously changing from a high concentration of one component to a lower concentration of that component, or from a low concentration of one component to a higher concentration of that component, in a direction away from a substrate or other layers. For example, the concentration of the (alumina + silica)-based component can continuously change from about 40 percent by weight, in that inner portion of the coating adjacent to another coating layer, to about 5 percent by weight, in that outer portion of the coating exposed to the environment. Similarly, the concentration of the zirconia-based component can continuously change from about 60 percent by weight, in that inner portion of the coating adjacent to another coating layer, to about 95 percent by weight, in that outer portion of the coating exposed to the environment.

The thermally-sprayed ceramic mixture coatings can comprise two or more sublayers in which the zirconia-based component and (alumina + silica)-based component continuously change in size throughout the sublayers. The thermally-sprayed ceramic mixture coatings can comprise two or more sublayers in which the zirconia-based component and (alumina + silica)-based component discretely change in size from one sublayer to another.

Additionally, the thermally sprayed ceramic mixture coatings can comprise a plurality of vertical macrocracks homogeneously dispersed throughout the coating. Such coatings can be formed by methods known in the art. See, for example, U.S. Patent No. 5,073,433, the disclosure of which is incorporated herein by reference.

For example, a ceramic mixture powder may be thermally deposited onto a substrate to form a monolayer having at least two superimposed splats of the deposited powder on the substrate in which the temperature of a subsequent deposited splat is higher than the temperature of a previously deposited splat. Next, the monolayer is cooled and solidified to produce a plurality of vertical cracks in the monolayer due to shrinkage of the deposited splats. The above steps are repeated to produce an overall coated layer in which each monolayer has induced vertical cracks through the splats. Preferably, the at least 70 percent of the vertical cracks in each monolayer are aligned with vertical cracks in an adjacent monolayer to form vertical macrocracks having a length of at least 4 mils (0,102mm) up to the thickness of the coating and the coated layer has at least about 20, or at least about 40, vertical macrocracks per linear inch measured in a line parallel to the surface of the substrate. The coating process can be controlled to produce vertical segmentation cracking essentially through the full coating thickness, having at least about 10 segmentation cells per inch (2.54 cm) (cell diameter of 0.1 inch (2.54 mm) or less).

A suitable thickness for the thermally sprayed coatings utilized in this invention can be up to about 1000 microns or greater depending on the particular application and the thickness of any other layers. High application temperatures, e.g., up to 1200°C, necessitate thick protective coating systems, generally on the order of 250 microns or more.

In an embodiment, the stationary abradable seal surface can comprise (i) a metallic or non-metallic substrate, (ii) at least one metallic or metallic/ceramic inner layer deposited onto the substrate, (iii) optionally at least one ceramic intermediate layer deposited onto the inner layer, and (iv) at least one ceramic outer layer deposited onto the inner layer, or optionally the intermediate layer. The ceramic outer layer can preferably comprise a thermally sprayed coating made from a ceramic powder comprising ceramic powder macroparticles, said ceramic powder macroparticles comprising a zirconia-based component and an (alumina + silica)-based component, wherein said ceramic powder macroparticles contain from about 10 to about 95 percent by weight of the zirconia-based component and about 5 to about 90 percent by weight of the (alumina + silica)-based component, and wherein the average particle size of the ceramic powder macroparticles is from about 10 to about 150 microns.

Illustrative metallic and non-metallic substrates include, for example, metallic superalloys of various nickel-base, cobalt-base or iron-base compositions and ceramic materials composed of silicon carbide and silicon nitride based non-metallics.

Illustrative metallic and metallic/ceramic inner layers that can be deposited onto the substrate include, for example, thermally sprayed metallic bondcoat layers of NiCoCrAlY or NiCrAlY and oxide-dispersed layers of these metallic components with alumina or yttria particulates, or diffusion produced layers of aluminide or platinum-aluminide compounds. The bondcoat can have a surface roughness of at least about 150 microinches. The bondcoat typically ranges in thickness from about 3 to about 10 mils (about 0.08 to about 0.25 mm). Single or multiple layers of bondcoats or inner layer coats can be first applied to a metal substrate producing a controlled upper surface roughness of at least about 150 microinches prior to the ceramic layer or layers. In addition, the bondcoat or inner layers can be heat treated before or after the over-coated ceramic layers are applied. The bondcoat or inner layers can be heat treated, then the over-coated ceramic layers can be applied, and then all the layers can be heat treated together. The bondcoat or inner layers and the over-coated ceramic layers can be heat treated together in one heat treatment. The bondcoat or inner layers can be heat treated and the over-coated ceramic layers not heat treated.

Illustrative ceramic intermediate layers that optionally can be deposited onto the inner layer include, for example, single component coatings of yttria-stabilized zirconia, or employing other stabilizers, deposited with a controlled level of porosity, or additionally, with a controlled concentration of segmentation cracks running vertically through said layer.

Illustrative ceramic outer layers that can be deposited onto the inner layer, or optionally the intermediate layer, include, for example, the abradable ceramic coatings made from ceramic powder mixtures, stabilized zirconia coatings, zirconia coatings having a macrocracked microstructure, and the like. One or more ceramic layers, e.g., stabilized zirconia coating, can be applied over the ceramic layer. The one or more ceramic layers can have the same or different composition, porosity and/or segmentation crack density as the inner layer, or optionally the intermediate layer.

The abradable ceramic coating can also comprise a non-thermally sprayed layer on a metallic substrate. Such a coating can be comprised of particles of metal coated ceramic cores made to adhere to the metallic substrate and form cohesive bonds between the particles by pressure less sintering at high temperature in vacuum. The ceramic core can be chosen from a variety of materials, for example, Bentonite clay (Al2O3.5SiO2), mullite (3Al2O3.2SiO2), yttria-stabilized zirconia, yttria-stabilized zirconia plus mullite, and the like. The ceramic core is of nominally spherical form and of about 5 to about 200 microns in diameter in a distribution of such sizes to produce an average size of nominally about 100 microns. The metal coating essentially fully encapsulates the individual ceramic core particles with a thickness of about 2 to about 20 microns. The metal coating can be chosen from a variety of materials, for example, Ni-Cr alloys, Ni-Cr-Al alloys, Al-Si alloys, Ni-Cr-Al-Y alloys, and the like.

A suitable thickness for the coating layers above can be up to about 1000 microns or greater depending on the particular application and the thickness of any other layers. High application temperatures, e.g., up to 1200°C, necessitate thick protective coating systems, generally on the order of 250 microns or more.

The abradable ceramic coatings may be produced by a variety of methods well known in the art. These methods include thermal spray (plasma, HVOF, detonation gun, etc.), laser cladding; and plasma transferred arc. Thermal spray is a preferred method for deposition of the ceramic powders to form the coatings. Such methods may also be used for deposition of the coating layers, e.g., metallic or metallic/ceramic inner layer, ceramic intermediate layer, and ceramic outer layer, described above.

The coating system can be heat treated after coating, preferably in an inert or controllably oxidizing atmosphere. In an embodiment, only an inner layer or bondcoat is heat treated after coating. The heat treatment can be conducted at a maximum temperature of from about 600°C to about 1200°C for a period of from about 0.5 to about 10 hours, and at a heating and cooling rate to and from the maximum temperature of between about 5°C per minute and about 50°C per minute. In a preferred embodiment, the heat treatment is conducted in an inert or controllably oxidizing atmosphere, at a maximum temperature of from about 600°C to about 1150°C for a period of from about 0.5 to about 4 hours, and at a heating and cooling rate to and from the maximum temperature of between about 5°C per minute and about 50°C per minute.

In another embodiment, the abradable ceramic coating can be deposited by electron beam physical vapor deposition. With respect to the ceramic mixtures, the electron beam physical vapor can use separate feedstock ingots for the zirconia-based component and for the (alumina + silica)-based component, and the relative deposition rates can be selected to produce the coating system. Alternatively, the abradable ceramic coating can be thermally sprayed onto the inner layer, or optionally the intermediate layer, that has been pre-heated to at least 500oC.

The gas turbine engine seal systems of this invention have a tip-to-seal wear ratio of at least about 1:10, preferably at least about 1:20. For the abradable/abrasive coating pairs, the infeed per strike of the abrasive tip surface to the stationary abradable seal surface generates wear debris particles having an average particle size (diameter) of from about 1 micron or less to about 150 microns. The porosity of the abradable ceramic coating can be controlled in size and distribution to enhance the breakdown of the coating to locations at micron sized particle boundaries or along shear planes of micron size thickness. The preferred abradable/abrasive coating pairs preferably have oxidation resistant ceramic abrasive particles and metallic matrix for the abrasive tip surface and erosion resistant abradable coatings for the stationary seal surface.

Among other advantages, this invention provides unique abradable/abrasive coating pairs for clearance control applications that minimizes blade tip loss, generates wear debris of fine size, of the order of the infeed per strike, is of low cost, and is applicable over a wide range of turbine and compressor operating conditions. The options for choice of the abrasive and abradable materials, both being ceramics, provide for higher operating temperatures than current metallic seal systems.

## Claims

1. A gas turbine engine seat system comprising a rotating member having an abrasive tip surface disposed in rub relationship to a stationary abradable seal surface, wherein said abrasive tip surface comprises an abrasive coating deposited onto at least a portion of the tip surface, wherein said abrasive coating comprises a metallic alloy matrix having ceramic abrasive particles at least partially embedded in said matrix and at least some of the ceramic abrasive particles projecting from said matrix; wherein said abradable seal surface comprises an abradable ceramic coating deposited onto at least a portion of the seal surface, wherein said ceramic coating is made from a ceramic powder comprising ceramic powder macroparticles, said ceramic powder macroparticles comprising a zirconia-based component and an (alumina + silica)-based component, wherein said ceramic powder macroparticles contain from 10 to 95 percent by weight of the zirconia-based component and 5 to 90 percent by weight of the (alumina + silica)-based component, and wherein the average particle size (diameter) of the ceramic powder macroparticles is from 10 to 150 microns; and wherein said gas turbine engine seal system has a tip-to-seal wear ratio of at least 1:10, preferably at least 1:20.

2. The gas turbine engine seal system of claim 1, wherein said ceramic abrasive particles are selected from alumina polycrystal, alumina single crystal (sapphire), chromia-doped alumina single crystal (ruby), yttria-alumina garnet (YAG), titania-doped alumina polycrystal or single crystal (emerald), SiAlON, SiC, Si₃N₄ or diamond.

3. The gas turbine engine seal system of claims 1 or 2 wherein the metallic alloy matrix comprises MCrAlY where M is Ni, Co, Fe or combinations thereof.

4. The gas turbine engine seal system of claims 1 or 2 wherein the ceramic abrasive particles comprise angular ceramic abrasive particles of nominal size 0.10 to 0.38 mm (4 to 15 mils).

5. The gas turbine engine seal system of claims 1 or 2 wherein the ceramic abrasive particles have a hardness of from 1000 Kg/mm² to 7000 Kg/mm² and a fracture toughness of from 1.5 Mpa*m^{0.5} to 8 Mpa*m^{0.5}.

6. The gas turbine engine seal system of claims 1 or 2 wherein the ceramic abrasive particles are embedded in said matrix to a depth of about nominally half the size of the ceramic abrasive particles, with an upper portion of the ceramic abrasive particles projecting above said matrix.

7. The gas turbine engine seal system of claims 1 or 2 wherein a bondcoat is deposited between the tip surface and the abrasive coating or deposited between the seal surface and the ceramic coating or both.

8. The gas turbine engine seal system of claim 7 wherein the bondcoat comprises MCrAlY where M is Ni, Co, Fe or combinations thereof.

9. The gas turbine engine seal system of claim 7 wherein the bondcoat comprises a MCrAlY+X coating, where M is Ni, Co or Fe or any combination of the three elements, and X includes the addition of Pt, Ta, Hf, Re or other rare earth metals, or fine alumina dispersant particles, singularly or in combination.

10. The gas turbine engine seal system of claims 1 or 2 wherein said abrasive coating thickness is from 0.0635 to 2.54 mm (0.0025 to 0.10 inches).

11. The gas turbine engine seal system of claims 1 or 2 wherein said abradable ceramic coating is made from a ceramic powder that is blended with a fugitive material selected from controlled size particles of a polyester or Lucite.

12. The gas turbine engine seal system of claims 1 or 2 wherein said abradable ceramic coating is made from a ceramic powder that is blended with a solid lubricant.

13. The gas turbine engine seal system of claims 1 or 2 wherein the abradable ceramic coating has a porosity that increases from an inner surface of the ceramic coating to an outer surface of the ceramic coating.

14. The gas turbine engine seal system of claims 1 or 2 wherein the abradable ceramic coating has a density of from 45 to 90 percent of theoretical.

15. The gas turbine engine seal system of claims 1 or 2 wherein the abradable ceramic coating has a thickness of from 0.508 to 2.54 mm (0.02 to 0.10 inches).

16. The gas turbine engine seal system of claims 1 or 2 wherein the abradable ceramic coating further comprises a plurality of vertical macrocracks extending at least half the coating thickness in length up to the full thickness of the coating and having from 5 to 200 vertical macrocracks per linear inch measured in a line parallel to the surface of the seal and in a plane perpendicular to the surface of the seal.

## Patentansprüche

1. Gasturbinenmotor-Dichtungssystem, umfassend ein rotierendes Element, das eine Schleifspitzenoberfläche aufweist, die in reibender Beziehung zu einer ortsfesten zerreibbaren Dichtungsoberfläche steht, wobei die Schleifspitzenoberfläche eine Schleifbeschichtung umfasst, die auf mindestens einem Abschnitt der Spitzenoberfläche aufgebracht ist, wobei die Schleifbeschichtung eine Metalllegierungsmatrix umfasst, die keramische Schleifpartikel mindestens teilweise in die Matrix eingebettet aufweist, und mindestens einige der keramischen Schleifpartikel aus der Matrix herausragen; wobei die zerreibbare Dichtungsoberfläche eine zerreibbare Keramikbeschichtung umfasst, die auf mindestens einem Abschnitt der Dichtungsoberfläche aufgebracht ist, wobei die Keramikbeschichtung aus einem Keramikpulver hergestellt ist, das Makropartikel aus Keramikpulver umfasst, wobei die Makropartikel aus Keramikpulver eine auf Zirkoniumoxid basierende Komponente und eine auf (Aluminiumoxid + Siliciumdioxid) basierende Komponente umfassen, wobei die Makropartikel aus Keramikpulver 10 bis 95 Gewichtsprozent der auf Zirkoniumoxid basierenden Komponente und 5 bis 90 Gewichtsprozent der auf (Aluminiumoxid + Siliciumdioxid) basierenden Komponente enthalten, und wobei die durchschnittliche Partikelgröße (Durchmesser) der Makropartikel aus Keramikpulver von 10 bis 150 Mikrometer beträgt; und wobei das Gasturbinenmotor-Dichtungssystem ein Spitze-zu-Dichtung-Abnutzungsverhältnis von mindestens 1:10, vorzugsweise mindestens 1:20 aufweist.

2. Gasturbinenmotor-Dichtungssystem nach Anspruch 1, wobei die keramischen Schleifpartikel ausgewählt sind aus Aluminiumoxid-Polykristall, Aluminiumoxid-Einkristall (Saphir), chromoxiddotiertem Aluminiumoxid-Einkristall (Rubin); Yttriumoxid-Aluminiumoxid-Granat (YAG), titanoxiddotiertem Aluminiumoxid-Polykristall oder -Einkristall (Smaragd), SiAlON, SiC, Si₃N₄ oder Diamant.

3. Gasturbinenmotor-Dichtungssystem nach Anspruch 1 oder 2, wobei die Metalllegierungsmatrix MCrAlY umfasst, wobei M für Ni, Co, Fe oder Kombinationen davon steht.

4. Gasturbinenmotor-Dichtungssystem nach Anspruch 1 oder 2, wobei die keramischen Schleifpartikel kantige keramische Schleifpartikel mit einer Nenngröße von 0,10 bis 0,38 mm (4 bis 15 mil) umfassen.

5. Gasturbinenmotor-Dichtungssystem nach Anspruch 1 oder 2, wobei die keramischen Schleifpartikel eine Härte von 1000 kg/mm² bis 7000 kg/mm² und eine Bruchfestigkeit von 1,5 MPa*m^{0,5} bis 8 MPa*m^{0,5} aufweisen.

6. Gasturbinenmotor-Dichtungssystem nach Anspruch 1 oder 2, wobei die keramischen Schleifpartikel bis zu einer Tiefe von etwa nominal der Hälfte der Größe in die Matrix der keramischen Schleifpartikel eingebettet sind, wobei ein oberer Abschnitt der keramischen Schleifpartikel über die Matrix ragt.

7. Gasturbinenmotor-Dichtungssystem nach Anspruch 1 oder 2, wobei ein Haftüberzug zwischen der Spitzenoberfläche und der Schleifbeschichtung aufgebracht ist oder zwischen der Dichtungsoberfläche und der Keramikbeschichtung oder beiden aufgebracht ist.

8. Gasturbinenmotor-Dichtungssystem nach Anspruch 7 wobei der Haftüberzug MCrAlY umfasst, wobei M für Ni, Co, Fe oder Kombinationen davon steht.

9. Gasturbinenmotor-Dichtungssystem nach Anspruch 7, wobei der Haftüberzug eine MCrAlY+X-Beschichtung ist, wobei M für Ni, Co oder Fe oder eine beliebige Kombination der drei Elemente steht und X die Zugabe von Pt, Ta, Hf, Re oder anderen Seltenerdmetallen oder feiner Aluminiumoxid-Dispergierpartikel, einzeln oder in Kombination, einschließt.

10. Gasturbinenmotor-Dichtungssystem nach Anspruch 1 oder 2, wobei die Dicke der Schleifbeschichtung von 0,0635 bis 2,54 mm (0,0025 bis 0,10 Zoll) beträgt.

11. Gasturbinenmotor-Dichtungssystem nach Anspruch 1 oder 2, wobei die zerreibbare Keramikbeschichtung aus einem Keramikpulver hergestellt ist, das mit einem flüchtigen Material, ausgewählt aus Partikeln mit kontrollierter Größe eines Polyesters oder Lucite, gemischt ist.

12. Gasturbinenmotor-Dichtungssystem nach Anspruch 1 oder 2, wobei die zerreibbare Keramikbeschichtung aus einem Keramikpulver hergestellt ist, das mit einem festen Schmiermittel gemischt ist.

13. Gasturbinenmotor-Dichtungssystem nach Anspruch 1 oder 2, wobei die zerreibbare Keramikbeschichtung eine Porosität aufweist, die von einer inneren Oberfläche der Keramikbeschichtung zu einer äußeren Oberfläche der Keramikbeschichtung zunimmt.

14. Gasturbinenmotor-Dichtungssystem nach Anspruch 1 oder 2, wobei die zerreibbare Keramikbeschichtung eine Dichte von 45 bis 90 Prozent des theoretischen Werts aufweist.

15. Gasturbinenmotor-Dichtungssystem nach Anspruch 1 oder 2, wobei die zerreibbare Keramikbeschichtung eine Dicke von 0,508 bis 2,54 mm (0,02 bis 0,10 Zoll) aufweist.

16. Gasturbinenmotor-Dichtungssystem nach Anspruch 1 oder 2, wobei die zerreibbare Keramikbeschichtung ferner eine Vielzahl vertikaler Makrorisse umfasst, die sich mindestens um die Hälfte der Beschichtungsdicke in der Länge bis zur vollen Dicke der Beschichtung erstrecken, und die 5 bis 200 vertikale Makrorisse pro linearem Zoll aufweist, gemessen in einer Linie parallel zu der Oberfläche der Dichtung und in einer Ebene senkrecht zu der Oberfläche der Dichtung.

## Revendications

1. Système de joint de moteur à turbine à gaz comprenant un élément rotatif ayant une surface de bout abrasive disposée dans une relation de frottement sur une surface de joint abradable stationnaire, dans lequel ladite surface de bout abrasive comprend un revêtement abrasif déposé sur au moins une partie de la surface de bout, dans lequel ledit revêtement abrasif comprend une matrice d'alliage métallique ayant des particules abrasives céramiques au moins partiellement intégrées dans ladite matrice et au moins certaines des particules abrasives céramiques faisant saillie à partir de ladite matrice ; dans lequel ladite surface de joint abradable comprend un revêtement céramique abradable déposé sur au moins une partie de la surface de joint, dans lequel ledit revêtement céramique est fabriqué à partir d'une poudre céramique comprenant des macroparticules de poudre céramique, lesdites macroparticules de poudre céramique comprenant un composant à base de zircone et un composant à base d'(alumine + silice), dans lequel lesdites macroparticules de poudre céramique contiennent de 10 à 95 pour cent en poids du composant à base de zircone et 5 à 90 pour cent en poids du composant à base d'(alumine + silice), et dans lequel la taille (diamètre) moyenne de particules des macroparticules de poudre céramique va de 10 à 150 micromètres ; et dans lequel ledit système de joint de moteur à turbine à gaz a un rapport d'usure du bout par rapport au joint d'au moins 1:10, de préférence au moins 1:20.

2. Système de joint de moteur à turbine à gaz selon la revendication 1, dans lequel lesdites particules abrasives céramiques sont choisies parmi un polycristal d'alumine, un monocristal d'alumine (saphir), un monocristal d'alumine dopé à l'oxyde de chrome (rubis), un grenat d'oxyde d'yttrium-alumine (YAG), un polycristal ou monocristal d'alumine dopé au dioxyde de titane (émeraude), du SiAlON, du SiC, du Si₃N₄ ou du diamant.

3. Système de joint de moteur à turbine à gaz selon les revendications 1 ou 2 dans lequel la matrice d'alliage métallique comprend MCrAlY où M est Ni, Co, Fe ou des combinaisons de ceux-ci.

4. Système de joint de moteur à turbine à gaz selon les revendications 1 ou 2 dans lequel les particules abrasives céramiques comprennent des particules abrasives céramiques angulaires d'une taille nominale de 0,10 à 0,38 mm (4 à 15 mils).

5. Système de joint de moteur à turbine à gaz selon les revendications 1 ou 2 dans lequel les particules abrasives céramiques ont une dureté allant de 1000 kg/mm² à 7000 kg/mm² et une ténacité à la rupture allant de 1,5 MPa*m^{0,5} à 8 MPa*m^{0,5}.

6. Système de joint de moteur à turbine à gaz selon les revendications 1 ou 2 dans lequel les particules abrasives céramiques sont intégrées dans ladite matrice à une profondeur d'environ nominalement la moitié de la taille des particules abrasives céramiques, avec une partie supérieure des particules abrasives céramiques faisant saillie au-dessus de ladite matrice.

7. Système de joint de moteur à turbine à gaz selon les revendications 1 ou 2 dans lequel une couche de liaison est déposée entre la surface de bout et le revêtement abrasif ou déposée entre la surface de joint et le revêtement céramique ou l'un et l'autre.

8. Système de joint de moteur à turbine à gaz selon la revendication 7 dans lequel la couche de liaison comprend MCrAlY où M est Ni, Co, Fe ou des combinaisons de ceux-ci.

9. Système de joint de moteur à turbine à gaz selon la revendication 7 dans lequel la couche de liaison comprend un revêtement de MCrAlY+X, où M est Ni, Co ou Fe ou n'importe quelle combinaison des trois éléments, et X inclut l'addition de Pt, Ta, Hf, Re ou d'autres métaux des terres rares, ou des particules fines de dispersant d'alumine, individuellement ou en combinaison.

10. Système de joint de moteur à turbine à gaz selon les revendications 1 ou 2 dans lequel ladite épaisseur de revêtement abrasif va de 0,0635 à 2,54 mm (0,0025 à 0,10 pouce).

11. Système de joint de moteur à turbine à gaz selon les revendications 1 ou 2 dans lequel ledit revêtement céramique abradable est fabriqué à partir d'une poudre céramique qui est mélangée à un matériau fugitif choisi parmi des particules à taille régulée d'un polyester ou de Lucite.

12. Système de joint de moteur à turbine à gaz selon les revendications 1 ou 2 dans lequel ledit revêtement céramique abradable est fabriqué à partir d'une poudre céramique qui est mélangée à un lubrifiant solide.

13. Système de joint de moteur à turbine à gaz selon les revendications 1 ou 2 dans lequel le revêtement céramique abradable a une porosité qui augmente d'une surface interne du revêtement céramique jusqu'à une surface externe du revêtement céramique.

14. Système de joint de moteur à turbine à gaz selon les revendications 1 ou 2 dans lequel le revêtement céramique abradable a une masse volumique allant de 45 à 90 pour cent de la valeur théorique.

15. Système de joint de moteur à turbine à gaz selon les revendications 1 ou 2 dans lequel le revêtement céramique abradable a une épaisseur allant de 0,508 à 2,54 mm (0,02 à 0,10 pouce).

16. Système de joint de moteur à turbine à gaz selon les revendications 1 ou 2 dans lequel le revêtement céramique abradable comprend en outre une pluralité de macrofissures verticales s'étendant au moins sur la moitié de l'épaisseur de revêtement dans la longueur jusqu'à l'épaisseur complète du revêtement et ayant de 5 à 200 macrofissures verticales par pouce linéaire mesurées dans une ligne parallèle à la surface du joint et dans un plan perpendiculaire à la surface du joint.
